# EUROPÄISCHE PATENTSCHRIFT

(11) **EP 3 224 497 B1**
(45) Veröffentlichungstag und Bekanntmachung des Hinweises auf die Patenterteilung: **06.03.2019**
(21) Anmeldenummer: 15794467.9
(22) Anmeldetag: 06.11.2015
(51) Int. Cl.: F16D 65/56

(54) **SCHEIBENBREMSE, INSBESONDERE FÜR NUTZFAHRZEUGE**
DISC BRAKE ESPECIALLY FOR UTILITY VEHICLES
FREIN À DISQUE EN PARTICULIER POUR VÉHICULES UTILITAIRES

(30) Priorität: 25.11.2014 DE 102014017430
(43) Veröffentlichungstag der Anmeldung: 04.10.2017
(73) Patentinhaber: WABCO Europe BVBA, 1170 Brüssel (BE)
(72) Erfinder: HENNING, Paul, 68723 Schwetzingen (DE); JUNGMANN, Hans-Christian, 69517 Gorxheimertal (DE); KELLER, Marcus, 69469 Weinheim (DE); MACUTKIEWICZ, Piotr, 58-100 Swidnica (PL); REDEMANN, Bernward, 68766 Hockenheim (DE); STINGL, Gunther, 64367 Mühltal (DE)
(74) Vertreter: Lauerwald, Jörg
(86) Internationale Anmeldenummer: PCT/EP2015/002233
(87) Internationale Veröffentlichungsnummer: WO 2016/082912

(56) Entgegenhaltungen:
- EP-A1- 0 545 358
- DE-A1- 4 034 165
- DE-A1- 19 814 807
- DE-A1-102005 003 223

## Beschreibung

Die Erfindung betrifft eine Scheibenbremse, insbesondere für Nutzfahrzeuge, mit einer Bremsscheibe, einem Bremssattel, mindestens einer auf einer Seite der Bremsscheibe innerhalb des Bremssattels liegenden Zuspanneinrichtung, einer axial verschieblichen Einrichtung, die bei Betätigung der Bremse einen Bremsbelag mittels mindestens einer Stellspindel axial in Richtung der Bremsscheibe verschiebt, wobei die Stellspindel drehbar ist, ein Außengewinde aufweist und in eine Gewindebohrung in der verschieblichen Einrichtung eingeschraubt ist, und mit einem Nachstellgetriebe, das um eine parallel zur Drehachse der Bremsscheibe liegende Achse verdrehbar ist und bei Verdrehen in einer ein Nachstellen bewirkenden ersten Drehrichtung wegen einer in dieser Drehrichtung wirkenden Drehkopplung die Stellspindel verdreht.

Derartige Scheibenbremsen sind in der Regel pneumatisch oder elektromechanisch betätigbar.

Generell sind Verschleißnachstellvorrichtungen in unterschiedlichen Ausführungen bekannt, beispielsweise mechanische Nachstellungen, wie sie heute in gängigen Nutzfahrzeugscheibenbremsen für ein in bestimmten Grenzen konstantes Lüftspiel sorgen. Da die Nachstellungen unter allen Fahr- und Bremssituationen ein konstantes Lüftspiel aufrechterhalten müssen, sind die Anforderungen an die Präzision derartiger Nachstellungen sehr hoch. Es bestimmt nämlich insbesondere das Lüftspiel, das bis zur Belaganlage überwunden werden muß, den Schwenkweg beispielsweise eines zur Zuspannung dienenden Drehhebels und somit die maximal aufzubringende Bremskraft bzw. die Bremskraftreserve.

Bei solchen mit einer Nachstellvorrichtung ausgerüsteten Scheibenbremsen wird bei Bremsbetätigung und einem gegenüber einem Sollwert veränderten Lüftspiel die Nachstellvorrichtung aktiviert, beispielsweise durch ein Zustellelement einer Zuspanneinrichtung der Scheibenbremse. Tritt also ein Verschleiß von Bremsbelägen und/oder der Bremsscheibe mit einer daraus resultierenden Veränderung (Vergrößerung) des Lüftspiels auf, so erfolgt ein selbsttätiges Nachstellen der Beläge mittels der Nachstellvorrichtung, beispielsweise durch eine Verstellbewegung von Druckstempeln. Ein konstruktiv vorgegebenes Lüftspiel ist in Form fester geometrischer Größen in den am Nachstellvorgang beteiligten Bauelementen abgebildet.

Aus der DE 195 07 308 A1 und der DE 10 2008 037 775 B3 sind Scheibenbremsen bekannt, die eine drehhebelbetätigte Zuspanneinrichtung aufweisen. Zur Zuspann-einrichtung selbst gehört in diesen Fällen ein Drehhebel mit einer exzentrisch wirkenden Bremswelle, deren Dreh- oder Gleitachse parallel zur Bremsscheibenebene liegt und die auf ein im Bremssattel verschiebbares Druckstück einwirkt. Anstelle von "Druckstück" ist bisweilen auch von einer Traverse oder einer Brücke die Rede. Der Einfachheit halber wird daher im Folgenden nur noch von einem "verschiebbaren Element" gesprochen. Das verschiebbare Element selbst ist drehfest im Bremssattel angeordnet. In dem verschiebbaren Element ist mittig eine Druckspindeleinrichtung gelagert, die eine drehbare und mit einem Druckbund versehende Nachstellmutter und eine darin eingeschraubte, aber drehfest gehaltene Druckspindel bzw. Stellspindel aufweist. Über diese Teile wird die Zuspannkraft auf wenigstens einen Bremsbelag übertragen, der dann gegen die Bremsscheibe gepreßt wird.

Bei den oben genannten bekannten Scheibenbremsen ist die Nachstellvorrichtung am bremsscheibenabgewandten Endbereich der drehbar und mit einem Druckbund versehenen Nachstellmutter ortsfest gehalten. Da die Nachstellmutter selbst ebenfalls ortsfest in dem verschiebbaren Element gelagert ist, folgt die Nachstellvorrichtung den Axialbewegungen des verschiebbaren Elements bei Zuspannbewegungen.

Der Begriff "ortsfest" bezieht sich auf die Position der Nachstellvorrichtung sowohl bei unbetätigter Bremse, als auch bei betätigter Bremse und während der Nachstellung selbst.

Die zur Nachstellung gehörenden Teile sind funktionsmäßig in einen Antriebs- und einen Abtriebsbereich zu unterteilen, wobei der Antriebsbereich mit dem Drehhebel zur Drehmitnahme gekoppelt ist. Über eine als Einwegkupplung wirkende Schlingfeder wird die Drehbewegung auf den Abtriebsbereich übertragen, der über eine federbelastete und somit last- bzw. drehmomentabhängig wirkende mechanische Trennkupplung/Trenneinrichtung die Verdrehung der Nachstellmutter bewirkt. Bei der Trennkupplung/Trenneinrichtung handelt es sich beispielsweise um einen Reibkonus. Da die in die drehbare Nachstellmutter eingeschraubte Druck- bzw. Stellspindel verdrehfest gehalten ist, wird sie in Richtung der Bremsscheibe herausgeschraubt. Der Nachstellschritt wird beendet, wenn aufgrund des Krafthubes die Reibung in der Nachstellmutterlagerung bzw. Gewindepaarung ansteigt und das maximal mögliche Nachstellmoment übersteigt. Die drehmomentabhängige Kupplung rutscht dann durch, wodurch elastische Bremsenverformungen während des Krafthubes nicht in den Nachstellweg einfließen können.

Bei den oben beschriebenen bekannten Bremsen liegen die zur Nachstellung gehörenden Teile in Axialrichtung gesehen hintereinander und sind ortsfest mit dem verschiebbaren Element verbunden. Dies erfordert eine entsprechende Einbaulänge in Axialrichtung. Da weiterhin die Zuspannteile, also die Nachstellmutter und die Druckspindel, entsprechenden Bauraum in Anspruch nehmen, ist eine Vergrößerung der Teile zur Erzielung von höheren Zuspannkräften bedingt durch die vorgegebene Sattelkontur nicht möglich. Zudem können in allen Nachstellvorrichtungen die die federbelastete mechanische Trenneinrichtung bildenden Nachstellsteile einem relativen Verschleiß in den Kontaktbereichen unterliegen, was die Nachstellgenauigkeit beeinflußt.

Aus der DE 40 34 165 A1 ist eine Scheibenbremse mit einem als Traverse bezeichneten verschiebbaren Element bekannt. Das verschiebbare Element ist mit einer Gewindebohrung versehen, in die eine Stellspindel eingeschraubt ist, welche in Wirkverbindung mit einer Nachstellvorrichtung (Drehantrieb) zur Lüftspieleinstellung steht.

Bei dieser bekannten Bremse ist die Gesamtheit der als Drehantrieb dienenden Nachstellvorrichtung in Axialrichtung länglich bzw. röhrenförmig als zusammenhängende Baugruppe ausgeführt. Diese wird durch eine der Bremsscheibe abgewandte Sattelöffnung ins Sattelinnere verbracht und dort ortsfest am Sattelende befestigt, so daß sie sich in eine Öffnung der Stellspindel hinein erstreckt. Der Drehantrieb liegt daher konzentrisch innerhalb der hohlen Drehspindel. Dabei ist der Drehantrieb bzw. dessen Abtriebsteil undrehbar, aber axial verschiebbar mit der Stellspindel über axiale Profilierungen gekoppelt. Damit werden die Drehbewegungen des Nachstellers auf die Stellspindel übertragen. Mit zunehmender Verschleißnachstellung wird die Stellspindel in Richtung des Bremsbelages bzw. der Bremsscheibe aus dem verschiebbaren Element herausgeschraubt und somit auch gegenüber der ortsfesten Nachstellung axial verschoben. Als momentenabhängige Trenneinrichtung dienen innerhalb der Nachstellerbaugruppe Reibkupplungen oder Zahngesperre, die jeweils federbelastet sind und mechanisch wirken.

Da bei der Bremse nach der DE 40 34 165 A1 die Nachstellung ortsfest am Bremssattel befestigt ist und das als Traverse bezeichnete verschiebbare Element mit der Stellspindel bei jeder Betätigung verschoben wird, finden in den Kontaktbereichen zwischen der Nachstellung bzw. deren Abtriebsteil und der Stellspindel gegenläufige Relativverschiebungen statt, die zudem während eines Nachstellschrittes noch von Drehbewegungen überlagert werden. Da hier die Zuspannung einerseits und die Nachstelleinrichtung andererseits getrennte Baugruppen sind, erfordert dies entsprechenden Montageaufwand. Weiterhin können die gegensätzlichen Relativbewegungen die Genauigkeit der Nachstellung beeinflussen.

Zu der Bremse nach dem DE-GM 92 06 052 gehört eine Zuspanneinrichtung mit Drehhebel und eine Druckspindeleinrichtung, die nicht in einem zusätzlichen verschiebbaren Element, sondern unmittelbar im Bremssattel gelagert ist. Die Nachstellvorrichtung ist wiederum ortsfest am Bremssattel gehalten und liegt als separate Baugruppe in einer parallelen Achse zur Drehachse der Druckspindeleinrichtung. Die Drehbewegungen werden von der Nachstellung über ein Zahnradgetriebe auf die Druckspindeleinrichtung übertragen.

Eine ähnliche Scheibenbremse wie das DE-GM 92 06 052 zeigt die EP 1 852 627 A2. Sie ist zwar als Einspindelbremse ausgelegt. Wiederum ist aber ein Achsversatz zwischen der Nachstellung und der Druckspindeleinrichtung mit dazwischen liegendem Zahngetriebe vorgesehen.

Sowohl die Bremse nach dem DE-GM 92 06 052 als auch diejenige nach der EP 1 852 627 A2 sind mit mechanisch wirkenden Trenneinrichtungen (Reibkupplung) versehen, die federkraftgesteuert sind und eine übermäßige Nachstellung im Krafthub verhindern sollen.

Die Scheibenbremse nach der DE 10 2005 003 223 A1 ist eine Doppelspindelbremse mit ähnlichem Grundaufbau wie die eingangs genannten Bremsen nach der DE 195 07 308 A1 und der DE 10 2008 037 775 B3. Wiederum ist nämlich eine eine Nachstellmutter und eine Stellspindel aufweisende Druckspindeleinrichtung in einem verschiebbaren Element gelagert. Die Nachstellvorrichtung ist einerseits am verschiebbaren Element und andererseits - wie z.B. auch nach der DE 40 34 165 A1 - am Bremssattelende ortsfest angebracht. Da auch hier gegenläufige Relativbewegungen - und diese sogar innerhalb der Nachstellvorrichtung - stattfinden, sind der erste und der zweite Bereich der Nachstellung mittels axialer Verbindungskupplung (Klauenkupplung) gekoppelt. Auch diese Nachstellvorrichtung weist eine mechanisch wirkende Trenneinrichtung (Rutschkupplung) zur Vermeidung von übermäßigen Nachstellungen auf.

Die DE 20 2006 021 050 U1 zeigt eine ortsfest am Bremssattel gehaltene und zwischen zwei Druckstempeln gelagerte Nachstellvorrichtung, die im Kraftfluß der Zuspannung liegt, und eine last- bzw. drehmomentabhängig wirkende mechanische Trenneinrichtung in Form einer axial wirkenden Kugelkupplung zur Vermeidung übermäßigen Nachstellens.

Die DE 43 07 018 A1 zeigt eine Scheibenbremse mit einer in jedem Betriebszustand ortsfest am Bremssattel gehaltenen Nachstellvorrichtung, deren Abtriebsteil sich in die Stellspindel längserstreckt. Sie ist mittels Profilscheibe drehfest, aber axial verschiebbar mit der Stellspindel in Wirkverbindung bzw. damit gekoppelt. Als Drehantrieb für die Nachstellung über eine Einwegkupplung dient ein unmittelbar mit dem Drehhebel gekoppelter Federschenkel einer Drehfeder, wobei die Drehfeder als Überlastschutz sowie als Energiespeicher wirkt, um gegebenenfalls auch im Bremslösehub den sich während des Bremsvorgangs einstellenden Belagverschleiß nachzustellen. Neben den nachteiligen gegenläufigen Relativbewegungen während des Zuspann- und Nachstellvorganges in den Kontaktbereichen zwischen der Zuspannung und der Nachstellung selbst sind insbesondere die Ausführung und die Lagerung der Nachstellung sowohl bezüglich des Drehhebels und des Bremssattels als auch die Lagerung bezüglich der Nachstellteile untereinander durch Reibungseinflüsse störanfällig. Die Nachstellgenauigkeit könnte somit beeinträchtigt werden. Da weiterhin die Teile der Zuspannung und der Nachstellung im Bremssattel - axial gesehen - hintereinander liegen, ergeben sich Sattelbaulängen, die den Anforderungen an die engen Einbauverhältnisse im Nutzfahrzeug nicht gerecht werden. Zudem erfüllt der Montageaufwand nicht alle Anforderungen nach Automatisierung.

Die Erfindung geht aus von der aus der DE 40 34 165 A1 bekannten Scheibenbremse. Es liegt ihr die Aufgabe zugrunde, die bekannte Bremse derart zu verbessern, daß die oben beschriebenen Nachteile hinsichtlich Aufbau, Lagerung, Nachstellgenauigkeit und Einsatzflexibilität vermieden sind.

Erfindungsgemäß wird die gestellte Aufgabe bei einer Scheibenbremse der eingangs genannten Art dadurch gelöst, daß das Nachstellgetriebe eine Gewindeeinrichtung aufweist, die zumindest bei einem Verdrehen in einer der ersten Drehrichtung entgegengesetzten zweiten Drehrichtung mit dem Außengewinde der Stellspindel kämmt und das Nachstellgetriebe bezüglich der Stellspindel verschraubt, wobei die Gewindeeinrichtung eine Gewindescheibe aufweist, die mindestens einen zu dem Außengewinde der Stellspindel passenden Innengewindeabschnitt aufweist. Bevorzugt sind dabei drei oder mehr segmentierte Innengewindeabschnitte vorgesehen.

Darüber hinaus wird erfindungsgemäß die gestellte Aufgabe durch einen Klemmrollenfreilauf gelöst, um die Richtungsabhängigkeit der Kopplung des Nachstellgetriebes sicherzustellen.

Mit anderen Worten wird das Nachstellgetriebe nicht wie bei den bekannten Bremsen ortsfest am Bremssattel oder ortsfest an dem verschiebbaren Element gehalten. Vielmehr erfolgt die Halterung/Lagerung direkt am/auf dem Gewindebereich der Stellspindel. Die Wirkverbindung wird unmittelbar über das Außengewinde der Stellspindel hergestellt. Bei den bekannten Scheibenbremsen erforderliche Befestigungen/Halterungen des Nachstellgetriebes an dem verschiebbaren Element oder an dem Bremssattel können mithin entfallen. Die Stellspindel selbst trägt das Nachstellgetriebe.

Wie bereits oben erwähnt ist erfindungsgemäß das Nachstellgetriebe unmittelbar auf der Stellspindel gehalten. Daher kann die Nachstellmutter entfallen. Dadurch wird die Bremse erheblich vereinfacht.

Ferner ist erfindungsgemäß weiter bevorzugt vorgesehen, daß das Nachstellgetriebe eine Überlastkupplung aufweist. Weitere erfindungsgemäße Ausgestaltungen sehen dafür eine Toleranzhülse oder eine Ratschenkupplung vor.

Erfindungsgemäß weiter bevorzugt ist vorgesehen, daß das Nachstellgetriebe um mindestens eine Strecke axial verschieblich ist, die der maximalen Nachstellstrecke pro Nachstellschritt entspricht. Diese Ausgestaltung stellt sicher, daß das Nachstellgetriebe in keinem denkbaren Betriebszustand infolge von Axialverschiebungen irgendwo anschlägt.

Erfindungsgemäß weiter bevorzugt kann eine einem Verdrehen der Stellspindel entgegenwirkende Bremseinrichtung vorgesehen sein. Eine solche Bremseinrichtung dient zum einen dem Festhalten der Stellspindel während der Verschraubbewegungen des Nachstellgetriebes in der zweiten Drehrichtung. Zum anderen dient die Bremseinrichtung der Vermeidung von ungewollten Verstellungen infolge von Vibrationen und Rütteln auf Schlechtwegstrecken.

Das Nachstellgetriebe weist erfindungsgemäß weiter bevorzugt wenigstens eine Nut auf, deren Weite einem Solllüftspiel entspricht. Bei Scheibenbremsen, die mittels eines Drehhebels zugespannt werden, nimmt die Nut einen Mitnahmestift auf, der zum Verdrehen des Nachstellgetriebes beim Bremsen dient. Das Spiel des Mitnahmestiftes in der Nut bestimmt dabei das Lüftspiel.

Nach einer weiter bevorzugten Ausführungsform der Erfindung weist das Nachstellgetriebe einen Antriebsbereich und einen Abtriebsbereich sowie eine zwischen den beiden Bereichen liegende momentenabhängige Kupplung auf. Die momentenabhängige Kupplung stellt dabei einen Überlastschutz dar.

Die momentenabhängige Kupplung kann erfindungsgemäß eine Torsionsfeder aufweisen. Es kann aber auch die bereits oben erwähnte Toleranzhülse oder die Ratschenkupplung sein. Handelt es sich um eine Torsionsfeder, ist sie erfindungsgemäß bevorzugt vorgespannt.

Schließlich ist es erfindungsgemäß bevorzugt vorgesehen, daß die Torsionsfeder dazu ausgelegt ist, im Bremsüberhub Energie zu speichern und damit im Lösehub die Stellspindel im Sinne einer Nachstellung zu verstellen. Durch diese Ausgestaltung ist es möglich, bei größerem Verschleiß schneller wieder das Solllüftspiel zu erreichen, einfach weil nicht nur im Bremshub, sondern zusätzlich auch im Lösehub eine Nachstellung erfolgt.

Wie bereits oben ausgeführt ist erfindungsgemäß bevorzugt das Nachstellgetriebe in wenigstens zwei Funktionsbereiche unterteilt, nämlich einen Antriebsbereich und einen Abtriebsbereich. Die beiden Bereiche liegen bevorzugt konzentrisch zueinander und sind miteinander derart gekoppelt, daß sie einander nicht nur radial, sondern auch axial tragen. Somit stellt das Nachstellgetriebe eine vormontierte kompakte Baugruppe dar. Dadurch kann im Vergleich mit herkömmlichen Bremsen, wo die einzelnen Nachstellteile axial im Sattelinneren hintereinander liegen, Bauraum eingespart werden. Weiterhin sind keine Halterungen bzw. Befestigungsteile, wie beispielsweise Bremssattelbereiche, mehr nötig, um die einzelnen Teile miteinander in Umfangsrichtung und axial zu verbinden bzw. zu koppeln.

Bevorzugt wird die Wirkverbindung zwischen der Stellspindel und dem Nachstellgetriebe auf dem der Bremsscheibe abgewandten Gewindebereich der Stellspindel realisiert, der sich aus dem verschiebbaren Element hinaus ins Sattelinnere erstreckt. Die dadurch erzielte Einsparung an Bauraum kann für großzügigere Dimensionierungen der einzelnen Teile und/oder für zusätzliche Funktionsteile genutzt werden.

Bevorzugt ist das Nachstellgetriebe in Funktionsstellung über seinen Abtriebsbereich in Axialrichtung auf dem Gewindebereich der Stellspindel durch Formschlüssigkeit derart festgelegt, daß zumindest in demjenigen Betriebszustand, in dem kein Nachstellschritt vollzogen wird, immer eine definierte Abstandsposition gegenüber dem verschiebbaren Element vorliegt. Durch ein Funktionsspiel zwischen einschlägigen zueinander weisenden Flächen des verschiebbaren Elements einerseits und des Nachstellgetriebes andererseits können auch keine die Nachstellung beeinflussenden (Haft-)Reibungen durch Verspannungen seitens der Halterung usw. auftreten.

Die Wirkverbindung des Nachstellgetriebes mit der Stellspindel zur Einstellung des Solllüftspiels ist derart ausgelegt, daß bei Lüftspielvergrößerung infolge Belagverschleißes der erforderliche Nachstellschritt bei und/oder nach einer Bremsenbetätigung erfolgen kann.

Dafür ist erfindungsgemäß das Nachstellgetriebe mittels einer Einwegkupplung mit dem Gewindebereich der Stellspindel derart gekoppelt, daß die Einwegkupplung drehrichtungsabhängig in Sperrrichtung - also bei einem erforderlichen Nachstellschritt - wirkt und die Stellspindel in Richtung Bremsscheibe aus der Gewindebohrung des verschiebbaren Elements herausgeschraubt wird. Über die dabei in Sperrfunktion stehende Einwegkupplung wird somit auch das Nachstellgetriebe diesen Axialweg infolge der Drehung und entsprechend der Nachstellgröße mitvollziehen. Mit anderen Worten vollziehen die Stellspindel und das Nachstellgetriebe beim Nachstellschritt synchrone Bewegungen.

Bei dem Klemmrollenfreilauf sitzen die Klemmkörper umfänglich direkt auf dem Außengewinde der Stellspindel, und die Drehmomentübertragung erfolgt in Nachstellrichtung durch Reib- bzw. Kraftschluß in radialer und in Umfangsrichtung.

Damit das Nachstellgetriebe mit dem Klemmrollenfreilauf in Axialrichtung auf dem Außengewinde der Stellspindel festgelegt ist und nicht unbeabsichtigt wandert, ist stirnseitig eine Blechscheibe vorgesehen, die umfänglich mittels segmentierten Gewindeabschnitten in den Gewindeverlauf eingreift.

Damit das über die jeweilig vorgesehene Einwegkupplung auf die Stellspindel aufgeschraubte Nachstellgetriebe bei dieser Ausschraubbewegung nicht an dem verschiebbaren Element anschlägt und somit blockiert wird, ist das bereits oben genannte Funktionsspiel als Abstand zwischen den zueinanderliegenden Flächen des Nachstellgetriebes einerseits und des verschiebbaren Elements andererseits bevorzugt größer als der maximal mögliche Nachstellschritt bzw. -weg.

Somit liegt über die Formschlüssigkeit und in Sperrrichtung der Einwegkupplung eine "schwimmende" Lagerung des Nachstellgetriebes mittels der Stellspindel vor.

"Schwimmend" im obigen Sinne bedeutet, daß das Nachstellgetriebe der Nachstellspindel zumindest über den Weg des jeweiligen Nachstellschrittes synchron folgt. Dabei verkleinert sich (vorübergehend) das oben genannte Funktionsspiel.

Ist der Nachstellschritt vollzogen und der Bremsvorgang beendet, bewegen sich die Zuspann- und Nachstellteile über die Rückstellkraft wenigstens einer Druckfeder wieder in ihre Ausgangsposition. Dabei wird das Nachstellgetriebe in Freilaufrichtung der Einwegkupplung wieder in seine Ausgangsstellung und auf das oben genannte Funktionsspiel zurückgeschraubt. Damit sich dabei die Stellspindel nicht mit zurückschraubt, ist erfindungsgemäß bevorzugt ein Bremsring vorgesehen, der beispielsweise an dem verschiebbaren Element gehalten ist und mit konstantem Reibmoment auf die Stellspindel wirkt. Das dadurch auf das Außengewinde oder axial auf die Gewindeflanken der Stellspindel wirkende Reib- bzw. Haltemoment ist bevorzugt größer als das Löse- bzw. Freilaufmoment der sich öffnenden Einwegkupplung. Da das genannte Reibmoment kontinuierlich wirkt, können auch beispielsweise bei Bremsenschwingungen usw. keine unerwünschten Drehbewegungen der Stellspindel mit unerwünschten Lüftspielveränderungen erfolgen.

Während das Nachstellgetriebe über den gesamten verschleißkompensierenden Nachstellweg (Bremsbelag/Bremsscheibe) in einer festgelegten und konstanten / freitragenden Position gegenüber dem verschiebbaren Element bleibt, wird die Stellspindel zunehmend in Richtung der Bremsscheibe herausgeschraubt, bis die Belagverschleißgrenze erreicht ist.

Als Antriebsbereich des Nachstellgetriebes dient erfindungsgemäß weiter bevorzugt ein hülsenförmiges Teil, das im Folgenden als Nutring bezeichnet wird. Der Nutring kann mit der Einwegkupplung über verschiedenartige Überlastkupplungen gekoppelt sein.

Bei Verwendung eines Klemmrollenfreilaufs ist der Nutring über seinen Innendurchmesser mit dem Außenring des Klemmrollenfreilaufs beispielsweise über eine Toleranzhülse, einen Toleranzring oder einen Reibring kraft- bzw. reibschlüssig gekoppelt, um zum einen der Drehmomentübertragung und zum anderen der Überlastsicherung zu dienen.

Im Rahmen der Erfindung kann die als Überlastkupplung dienende Toleranzhülse auch durch eine Ratschenkupplung ersetzt werden, weil auch damit eine Drehmomentbegrenzung zur Vermeidung von übermäßigen Nachstellgrößen grundsätzlich möglich ist.

Der Nutring weist nach einer weiter bevorzugten Ausführungsform der Erfindung wenigstens einen axialen Nutbereich auf, der vorzugsweise radial auskragt und in den wenigstens ein mit einem der Zuspannung der Bremse dienenden Drehhebel bzw. einer solchen Bremswelle verbundener Mitnehmer, vorzugsweise ein Mitnahmestift, im Sinne einer Aktivierung des Nachstellgetriebes eingreift. In dem Anschlagspiel zwischen den Wandungen des wenigstens einen Mitnahmestifts und der wenigstens einen Axialnut wird das konstruktive Solllüftspiel vorgegeben. Die Vorgabe des Solllüftspiels kann aber auch zur weiteren Sicherstellung des Eingriffs durch zahnradähnliche Nutsegmente und mehrere beabstandete Mitnahmestifte erfolgen. Darüber hinaus ist es auch möglich, den Eingriff kinematisch umzukehren, sofern die geometrischen Verhältnisse dies erlauben. Dann wäre der Drehhebel bzw. die Bremswelle mit einer oder mehreren Nuten versehen, und der Nutring trüge einen oder mehrere Mitnahmestifte.

Es wird ausdrücklich darauf hingewiesen, daß sowohl die Prinzipien der Einweg- und der Drehmoment-/bzw. Überlastkupplungen wie vorab erläutert auch in anderen Konstellationen miteinander kombinierbar sind.

Im Folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine teilweise geschnittene Draufsicht auf eine Scheibenbremse nach einem bevorzugten Ausführungsbeispiel der Erfindung,
- Figur 2: eine schematische Seitenansicht der Scheibenbremse,
- Figur 3: die gleiche Ansicht wie Figur 2, jedoch mit verschlissenen Bremsbelägen und herausgeschraubter Stellspindel,
- Figur 4: eine teilweise geschnittene perspektivische Ansicht einer Baugruppe mit Zuspanneinrichtung, Nachstellgetriebe und Stellspindel,
- Figur 5: eine weitere perspektivische Ansicht einer Baugruppe mit Nachstellgetriebe,
- Figur 6: eine schematische Axialansicht einer Baugruppe mit Zuspanneinrichtung und aufgeschraubtem Nachstellgetriebe,
- Figur 7: die gleiche Ansicht wie Figur 6, jedoch von einem anderen Ausführungsbeispiel, und

Bei der in der Zeichnung dargestellten und mit dem Bezugszeichen 1 bezeichneten Scheibenbremse handelt es sich um eine pneumatisch oder elektromechanisch betätigte Scheibenbremse, deren Bremssattel 3 eine Bremsscheibe 2 umgreift. Beidseits der Bremsscheibe 2 sind Bremsbeläge 10 mit jeweils einem Bremsbelagträger 10a vorgesehen. Eine Zuspanneinrichtung ist allgemein mit der Bezugsziffer 4 bezeichnet. Sie ist hier einseitig im Bremssattel 3 angeordnet, bei dem es sich um einen Gleitsattel oder um einen Festsattel handeln kann. Zu der Zuspanneinrichtung 4 gehört ein Drehhebel 6, der mit einer parallel zur Hauptebene 2a der Bremsscheibe 2 im Bremssattel 3 angeordneten Zuspann- bzw. Bremswelle 6a verbunden ist. Ferner ist ein sich ebenfalls quer zur Bremsscheibenebene 2a erstreckendes und im Bremssattel 3 geführtes verschiebbares Element 5 vorgesehen. Der Drehhebel 6 stellt die Verbindung zwischen einer eine Kraft einleitenden Betätigungseinrichtung (nicht gezeigt) und der Bremswelle 6a dar. Die Bremsenachse liegt parallel zu der Hauptachse (nicht gezeigt) der Bremsscheibe 2 und ist mit der Bezugszahl A-B bezeichnet.

Wird der Drehhebel 6 in hier nicht näher zu erläuternder Weise durch eine am Bremssattelende befestigte Betätigungseinrichtung mittels beispielsweise einer eine Funktionsöffnung durchdringenden Druckstange in Richtung D verschwenkt, so übt er über die quer liegende Bremswelle 6a Druck auf das verschiebbare Element 5 aus, das bei dem dargestellten Ausführungsbeispiel von einer biegesteifen Traverse der Bremse gebildet ist und undrehbar, aber axial verschieblich im Bremssattel 3 gelagert ist. Die Zuspanneinrichtung 4 wird durch mindestens eine im Bremssattel 3 angeordnete Druckfeder 9 derart verspannt, daß alle Funktionsteile aneinander und der Drehhebel 6 in seiner Ruhestellung liegen, so daß ein Verrutschen ausgeschlossen ist.

Das verschiebbare Element 5 weist mindestens eine Gewindebohrung auf, in die mindestens eine Stellspindel 7 mit einem Außengewinde 7a eingeschraubt ist. Bei dem in der Zeichnung dargestellten Ausführungsbeispiel handelt es sich um eine Einspindelbremse. Die (einzige) Stellspindel 7 ist mittig im verschiebbaren Element 5 eingeschraubt. Somit wird die Zuspannkraft entweder direkt über die Stellspindel 7 oder, wie in dem dargestellten Ausführungsbeispiel, über ein in die Stellspindel 7 eingestecktes Druckstück 8 auf den zuspannseitigen Bremsbelag 10 übertragen. Daher wird bei Betätigen des Drehhebels 6 der Bremsbelag 10 verschoben und nach Überwindung des (Soll-)Lüftspiels L gegen die Bremsscheibe 2 gedrückt.

Bremsscheibenseitig ist der alle Funktionssteile in seinem Inneren aufnehmende Bremssattel 3 durch einen Verschlußdeckel 21 verschlossen, wobei die Durchtrittsöffnung im Verschlußdeckel für die Stellspindel 7 durch wenigstens eine Faltenmanschette 22 abgedichtet ist. Damit ist der Bremssattelinnenraum diesseitig verschlossen und gegenüber beispielsweise Umwelteinflüssen geschützt.

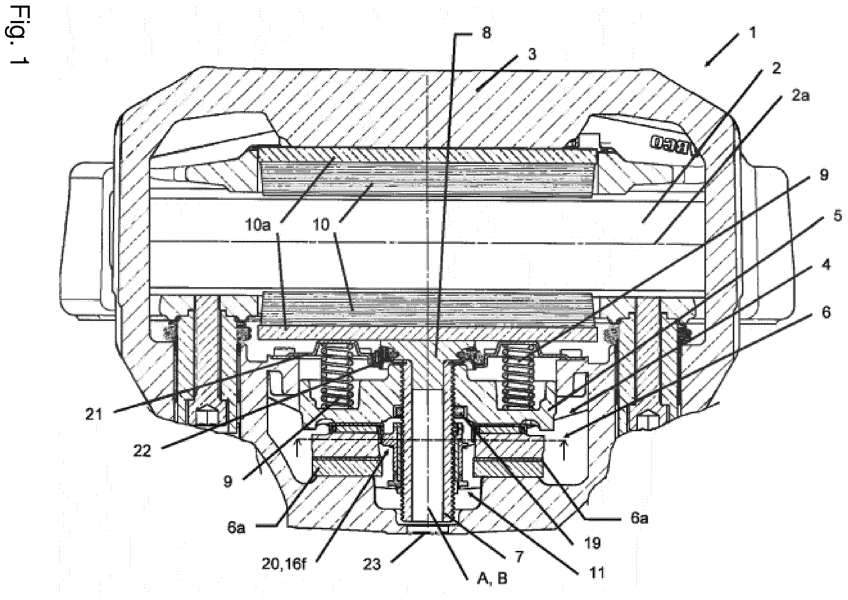

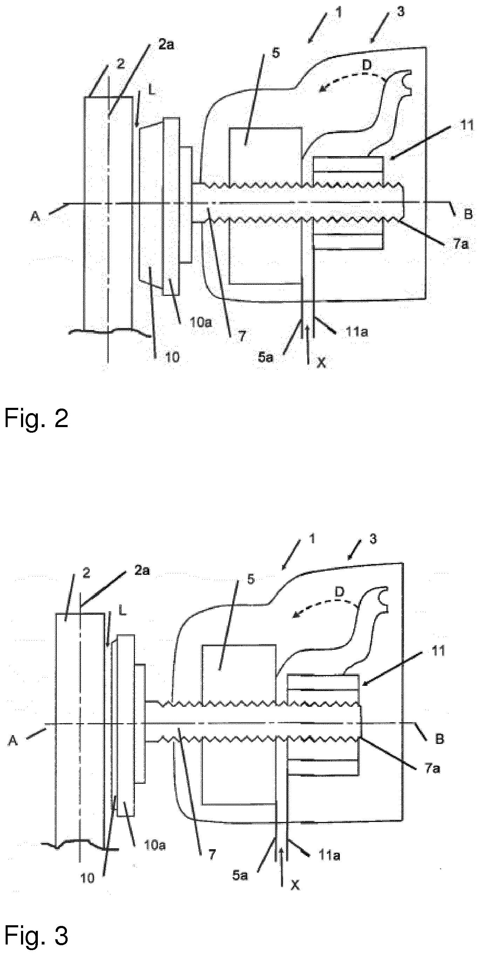

Die komplett vormontierte Baugruppe des Nachstellgetriebes ist allgemein mit der Bezugsziffer 11 bezeichnet. Sie ist in den Figuren 1 und 2 in der Ausgangsstellung bei neuen Bremsbelägen 10 dargestellt. Das auf die Stellspindel 7 unmittelbar aufgeschraubte Nachstellgetriebe 11 befindet sich dabei in der Position hinter dem verschiebbaren Element 5. Zwischen einer Stirnfläche 11a des Nachstellgetriebes 11 und einer Stirnfläche 5a des verschiebbaren Elements 5 ist ein Funktionsspiel X als Abstand vorhanden. Das Funktionsspiel X ist größer als der maximal mögliche Nachstellschritt bzw. -weg der ausschraubenden Spindel 7 während des Nachstellvorgangs. Es sei angemerkt, daß die in den Figuren dargestellten Größen L, X nur der Erläuterung dienen und tatsächlich größenmäßig von dem jeweiligen Bremsentyp abhängig sind.

Die Kopplung bzw. Aktivierung des Nachstellgetriebes 11 erfolgt durch einen an der Bremswelle 6 gehaltenen Mitnahmestift 20, der in eine Axialnut 16f des Nachstellgetriebes 11 eingreift. Bei dem gezeigten Ausführungsbeispiel ist schematisch ein Bremsring 19 dargestellt, der ein konstantes Reib- bzw. Haltemoment auf die Stellspindel 7 ausübt und somit unerwünschte Drehbewegungen der Stellspindel 7 verhindert. Vorzugsweise ist der Bremsring 19 am verschiebbaren Element 5 gehalten.

Während die Figuren 1 und 2 den Neuzustand der Bremsbeläge 10 bzw. der Bremsscheibe 2 mit entsprechender Teilelage im Bremseninnenraum zeigen, zeigt die Figur 3 schematisch den Zustand bei verschlissenen Bremsbelägen 10 mit entsprechend geänderter Teilelage. Ein Vergleich der Figur 3 mit den Figuren 1 und 2 macht deutlich, wie die Stellspindel 7 infolge der Nachstellschritte bzw. - bewegungen in Richtung der Bremsscheibe 2 aus dem verschiebbaren Element 5 und relativ zu dem Nachstellgetriebe 11 herausgeschraubt wurde, wobei alle anderen Teilepositionen erhalten bleiben. Ein entscheidender Vorteil des hier gezeigten Nachstellgetriebes besteht auch hinsichtlich der Bremssicherheit. Wird beispielsweise der maximal mögliche Belagverschleiß, aus welchem Grund auch immer, im Fahrbetrieb überschritten und die Bremse mit übermäßigem Verschleiß weiter betrieben, so wird ein übermäßiges Herausschrauben der Stellspindel 7 aus dem verschiebbaren Element 5 über die Reduzierung des Eingriffs eines Klemmrollenfreilaufs 15 verhindert. Mit anderen Worten können keine Nachstellmomente und somit auch keine Nachstellbewegungen mehr übertragen werden. Dadurch bleibt auch in Extremzuständen der Gewindekontakt bestehen, über den im Rahmen des Belagverschleißes der vom Drehhebel ausgehende Kraftfluß beim Bremsvorgang läuft. Bei herkömmlichen Nachstellungen kann dieses Herausschrauben - mit einem sofortigen Bremsausfall - nicht zuverlässig verhindert werden.

Werden in diesem Zustand die Bremsbeläge 10 erneuert, muß die Stellspindel 7 wieder zurückgeschraubt werden, um den erforderlichen Abstand zu der Bremsscheibe 2 für die neuen Beläge herzustellen. Dafür ist bei dem hier gezeigten Ausführungsbeispiel an der Bremsenrückseite eine Funktionsöffnung 23 vorgesehen, über die in hier nicht näher zu erläuternder Weise und mit geeigneten Mitteln die Stellspindel 7 in ihre Ausgangsstellung zurückgeschraubt werden kann. Nach vollzogenem Belagwechsel ist die Teilelage dann wieder wie in den Figuren 1 und 2 dargestellt. Die Funktionsöffnung 23 ist durch geeignete Mittel dichtend zu verschließen.

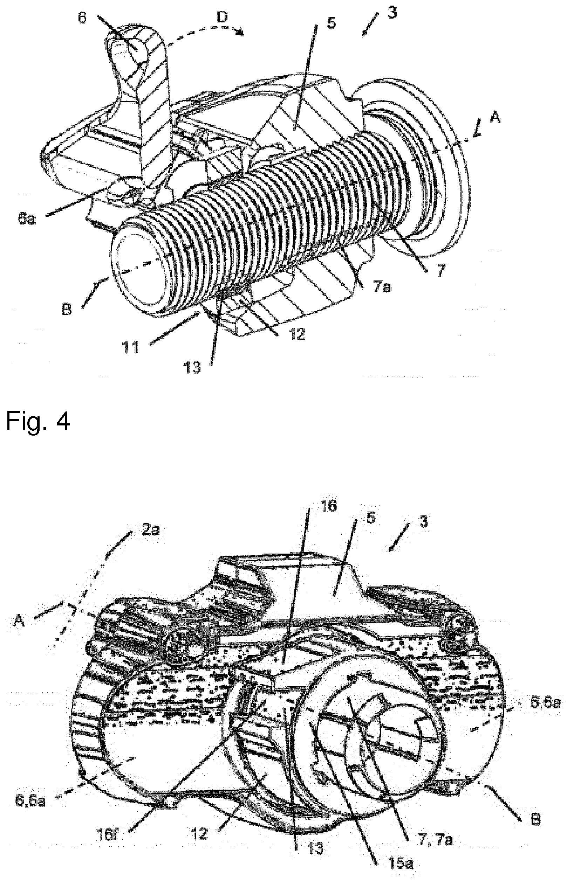

Figur 4 zeigt schematisch, wie das Nachstellgetriebe 11 - mit dem Antriebsbereich 12 und dem Abtriebsbereich 13 - auf bzw. in dem Außengewinde 7a der Stellspindel 7 gelagert ist.

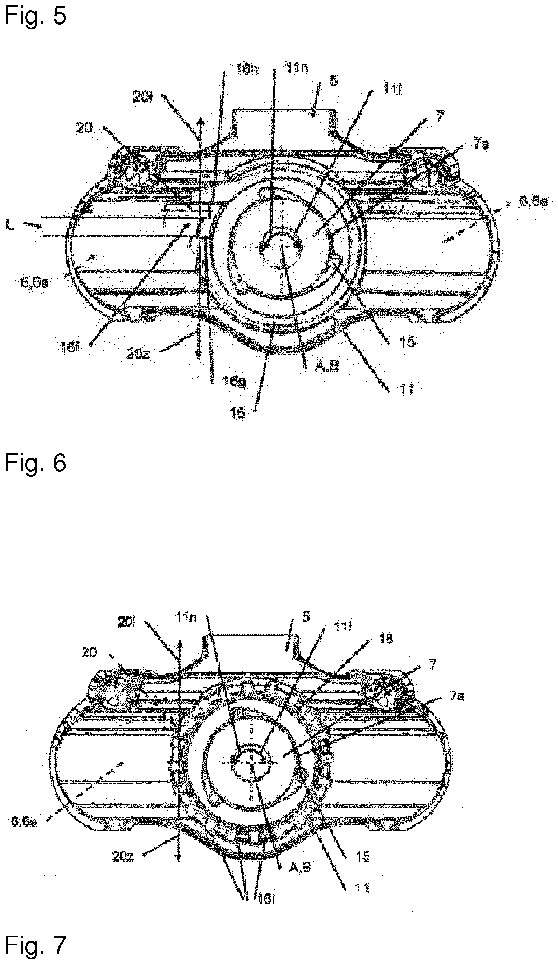

Figur 5 zeigt perspektivisch das verschiebbare Element 5 mit montierter Stellspindel 7 und das auf dem Außengewinde 7a der Stellspindel 7 montierte Nachstellgetriebe 11, welches bei der hier gezeigten Ausführungsform und nach den Figuren 6 und 7 mittels einer Gewindescheibe 15a verschraubt und axial gesichert auf der Stellspindel 7 lagert.

Die Figuren 6, 7 zeigen wie Figur 5 die Teile und deren Funktionslagen zueinander. Zwischen dem Nutring 16 und dem auf das Außengewinde 7a der Stellspindel 7 einwirkenden Klemmrollenfreilauf 15 ist zur kraft-/reibschlüssigen Drehmomentübertragung eine Toleranzhülse 18 verbaut, die als Überlastkupplung wirkt. Die Toleranzhülse 18 kann auch als Toleranzring oder Reibring bezeichnet sein. Der Vorteil dieser Art der Drehmomentbegrenzung liegt im einfachen Aufbau und in der verläßlicheren Funktion im Vergleich mit mechanischen Trennkupplungen, wie sie aus herkömmlichen Bremsen bekannt sind, beispielsweise mit federbelasteten Zahn- oder Kugelgesperren.

Der Nutring 16 weist einen Bereich mit einer Axialnut 16f auf, in die ein mit dem Drehhebel 6 bzw. der Bremswelle 6a verbundener Mitnahmestift 20 eingreift. Die Wandungen des Mitnahmestiftes 20 und der Axialnut 16f sind derart voneinander beabstandet, daß der Freiraum in einer Richtung 20z das Lüftspiel L bzw. den Leerhub konstruktiv vorgibt, wenn der Drehhebel 6 nach den Figuren 2 bis 4 in Richtung D verschwenkt wird. Figur 7 zeigt die Möglichkeit eines Mehrfacheingriffs eines oder mehrerer Nachstellstifte 20, bei dem am Nutring 16 umfängliche Nutsegmente 16f oder wie gezeigt in Zahnradform ausgebildet sind. Auch hier wird die Nachstellfunktion wie mit einer einzelnen Axialnut vollzogen.

Bei den dargestellten Ausführungsformen der Erfindung sind die Einbaulagen / Abstände zwischen dem verschiebbaren Element 5, der darin eingeschraubten Stellspindel 7 und dem auf die Stellspindel 7 aufgeschraubten Nachstellgetriebe 11 zueinander derart bemessen, daß sowohl die Ausrichtung der Axialnut 16f als auch das für den ungehinderten Nachstellvorgang erforderliche Funktionsspiel X für den kompletten Zusammenbau mit weiteren Teilen der Zuspanneinrichtung 4 voreinstellbar sind. Die Einbau- und Funktionslagen zeigen die Figuren 1, 2. Sie sind oben erläutert.

Die Nachstellfunktion wird anhand eines Ausführungsbeispiels wie folgt erläutert, insbesondere anhand der Figuren 2, 6 und 7.

Wird die Bremse nach Figur 2 mittels einer am Bremssattel 3 angebrachten und in der Zeichnung nicht gezeigten Betätigungseinrichtung betätigt, erfolgt ein Verschwenken des Drehhebels 6 in Richtung D, wobei über die Bremswelle 6a die vorgelagerten Zuspannteile gegen die Federkraft der Druckfedern 9 entlang der Achse A-B mit dem Bremsbelag 10 in Richtung der Bremsscheibe 2 verschoben werden. Dabei wird der Leerhub überwunden, der dem Solllüftspiel L entspricht. Das Solllüftspiel L wird hier konstruktiv nach Figur 6 als Anschlagspiel zwischen den Wandungen der Axialnut 16 und dem Mitnahmestift 20 vorgegeben. Der Mitnahmestift 20 liegt anfänglich an der oberen Nutwand 16h an. Liegt der Leer- bzw. Anlegehub innerhalb des Solllüftspiels L, erfolgt keine Nachstell-, sondern nur eine Zuspannbewegung.

Liegt eine Lüftspielveränderung mit Abweichung vom Solllüftspiel L vor, und der Drehhebel 6 wird weiter verdreht, drückt der Mitnahmestift 20 in Richtung 20z gegen die untere Nutwand 16g und der Nutring 16 wird verdreht. Über den Reibschluß mit der Toleranzhülse 18 dreht der Nutring 16 den in Sperrrichtung wirkenden Klemmrollenfreilauf 15, der dann seinerseits die Stellspindel 7 verdreht und damit das Lüftspiel reduziert. Dabei folgt das Nachstellgetriebe 11 in Nachstellrichtung 11n unter Verkleinerung des Funktionsspiels X der Stellspindelbewegung synchron.

Wird der Drehhebel 6 einschließlich der Bremswelle 6a nach dem Bremsvorgang über die Druckfeder 9 zurückbewegt, bewegt sich der Mitnahmestift 20 in Löserichtung 20l und dreht unter Anschlagen an der oberen Nutwand 16h den Nutring 16 in die Ausgangsposition zurück. Da das von dem Bremsring 19 auf die Stellspindel 7 wirkende Reibmoment M1 größer als das Freilaufmoment M3 des als Einwegkupplung dienenden Klemmrollenfreilaufs 15 ist, wird der Klemmrollenfreilauf 15 mit dem Nachstellgetriebe 11 in Löserichtung 11l über den Eingriff der Gewindescheibe 15a auf der sich nicht mitdrehenden Stellspindel 7 zurückgedreht, bis es wieder in seine Ausgangsstellung mit dem Funktionsspiel X gelangt.

Damit ist das Solllüftspiel L wieder eingestellt.

Finden Bremsbewegungen statt, die entweder über den normalen Bremshub mit entsprechenden elastischen Verformungen beispielsweise des Bremssattels 3 hinausgehen, oder stellt sich bei Bergabfahrten durch Dauerbremsungen ein erhöhter Belagverschleiß ein, steigt durch den Überhub das Moment an dem Klemmrollenfreilauf 15 stark an und die Drehbewegung wird durch die dem Überlastschutz dienende Toleranzhülse 18 gestoppt. Mit anderen Worten wird bei weiterer Drehbewegung des Nutrings 16, angetrieben durch den Mitnahmestift 20 in Zuspannrichtung 20z, der Reibschluß bzw. die Drehkopplung der Toleranzhülse 18 aufgehoben, wodurch wegen Durchrutschens auch kein weiterer Nachstellschritt mit einer übermäßigen Nachstellbewegung bzw. einem übermäßigen Ausschrauben der Stellspindel 7 aus dem Element 5 mehr erfolgen kann.

Somit ist es durch die oben beschriebenen Ausgestaltungen der Baugruppe des Nachstellgetriebes 11 möglich, mit einfachen Mitteln erforderliche Nachstellbewegungen wirkungsvoll und ohne die aus herkömmlichen Bremsen bekannten mechanischen Trennkupplungen zu steuern.

Dabei kann auch die Anzahl der Nachstellschritte zur Einstellung des Solllüftspiels im Vergleich mit bekannten Bremsen verringert werden, weil der Nachstellvorgang je nach Gegebenheit bzw. Ablauf des Bremsvorganges in beide Bewegungsrichtungen des Drehhebels erfolgen kann. Damit ist das Solllüftspiel schneller nachzustellen als bei herkömmlichen Lösungen, die nur bei Bewegung in einer Richtung nachstellen. Dadurch kann indirekt auch der Bremsenhub bzw. die Bremseneffizienz verbessert werden.

Sind beispielsweise im Rahmen von Servicearbeiten an der Bremse selbst oder bei einem Bremsbelagwechsel manuelle Justierungen erforderlich, so erfolgt dies durch Verdrehung der Stellspindel 7 in Zustell- oder Löserichtung durch geeignete Mittel über die bereits oben genannte Funktionsöffnung 23 an der Rückseite des Bremssattels 3.

Obwohl die Erfindung anhand einer Einspindelbremse erläutert worden ist, ist das erfindungsgemäße Nachstellgetriebe auch bei einer Zwei- oder Mehrspindelbremse einsetzbar. Dabei kann beispielsweise bei einer Zweispindelbremse jede Stellspindel mit einem eigenen Nachstellgetriebe bestückt sein. Alternativ kann die Nachstellbewegung von nur einem einzigen Nachstellgetriebe mittels entsprechender Synchroneinrichtung auf die andere Stellspindel gleichlaufend übertragen werden.

### Bezugszeichenliste

- 1: Scheibenbremse
- 2: Bremsscheibe
- 2a: Bremsscheibenebene
- 3: Bremssattel
- 4: Zuspanneinrichtung
- 5: verschiebbare Element (Druckstück / Traverse / Brücke)
- 5a: Stirnfläche axial (in Richtung 11a)
- 6: Drehhebel
- 6a: exzentrische Bremswelle
- 7: Stellspindel
- 7a: Außengewinde der Stellspindel 7
- 8: Druckstück
- 9: Rückstellfeder als Druckfeder
- 10: Bremsbelag
- 10a: Bremsbelagträger
- 11: Nachstellgetriebe
- 11a: Stirnfläche axial (in Richtung 5a)
- 11n: Nachstellrichtung (von 11)
- 11l: Löserichtung (von 11)
- 12: Antriebsbereich
- 13: Abtriebsbereich
- 15: Klemmrollenfreilauf
- 15a: Blechscheibe mit Innengewindeprofil (Gewindescheibe)
- 16: Nutring
- 16f: Axialnut (für 20)
- 16g: Nutwand
- 16h: Nutwand
- 17: Drehfeder / Torsionsfeder
- 18: Toleranzhülse / Toleranzring / Reibring
- 19: Bremsring
- 20: Mitnahmestift (an 6a)
- 20z: Zuspannrichtung (von 20)
- 20l: Löserichtung (von 20)
- 21: Verschlussdeckel (an 3)
- 22: Faltenmanschette
- 23: Funktionsöffnung (an 3)
- L: Leerweg / Lüftspiel
- X: Funktionsspiel (zwischen 5a und 11a)
- D: Schwenkrichtung Drehhebel
- A-B: Zuspann- und Drehachse der Stellspindel
- M1: konstantes Reibmoment vom Bremsring
- M3: Freilaufmoment Einwegkupplung

## Patentansprüche

1. Scheibenbremse, insbesondere für Nutzfahrzeuge, mit
einer Bremsscheibe (2),
einem Bremssattel (3),
mindestens einer auf einer Seite der Bremsscheibe (2) innerhalb des Bremssattels (3) liegenden Zuspanneinrichtung (4),
einer axialverschieblichen Einrichtung (5), die bei Betätigung der Bremse einen Bremsbelag (10) mittels mindestens einer Stellspindel (7) axial in Richtung der Bremsscheibe (2) verschiebt, wobei die Stellspindel (7) drehbar ist, ein Außengewinde (7a) aufweist und in eine Gewindebohrung in der verschieblichen Einrichtung (5) eingeschraubt ist, und
einem Nachstellgetriebe (11), das um eine parallel zur Drehachse der Bremsscheibe (2) liegende Drehachse (A-B) verdrehbar ist und bei Verdrehen in einer ein Nachstellen bewirkenden ersten Drehrichtung (11n) wegen einer in dieser Drehrichtung wirkenden Drehkopplung die Stellspindel (7) verdreht,
**dadurch gekennzeichnet, dass**
das Nachstellgetriebe (11) eine Gewindeeinrichtung (15a) aufweist, die zumindest bei einem Verdrehen in einer der ersten Drehrichtung (11n) entgegengesetzten zweiten Drehrichtung (11l) mit dem Außengewinde (7a) der Stellspindel (7) kämmt und das Nachstellgetriebe (11) bezüglich der Stellspindel (7) verschraubt, wobei die Gewindeeinrichtung eine Gewindescheibe (15a) aufweist, die mindestens einen zu dem Außengewinde (7a) der Stellspindel (7) passenden Innengewindeabschnitt aufweist und wobei das Nachstellgetriebe (11) einen Klemmrollenfreilauf (15) aufweist.

2. Scheibenbremse nach Anspruch 1, **dadurch gekennzeichnet, daß** das Nachstellgetriebe (11) eine Überlastkupplung (17, 18) aufweist.

3. Scheibenbremse nach Anspruch 2, **dadurch gekennzeichnet, daß** die Überlastkupplung eine Toleranzhülse (18) aufweist.

4. Scheibenbremse nach Anspruch 2, **dadurch gekennzeichnet, daß** die Überlastkupplung eine Ratschenkupplung ist.

5. Scheibenbremse nach einem der vorangehenden Ansprüche, **dadurch gekennzeichnet, daß** das Nachstellgetriebe (11) um mindestens eine Strecke (X) axial verschieblich ist, die der maximalen Nachstellstrecke pro Nachstellschritt entspricht.

6. Scheibenbremse nach einem der vorangehenden Ansprüche, **gekennzeichnet durch** eine einem Verdrehen der Stellspindel (7) entgegenwirkende Bremseinrichtung (19).

7. Scheibenbremse nach einem der vorangehenden Ansprüche, **gekennzeichnet durch** wenigstens eine Nut (16f) an dem Nachstellgetriebe (11), deren Weite einem Solllüftspiel (L) entspricht.

8. Scheibenbremse nach einem der vorangehenden Ansprüche, **dadurch gekennzeichnet, daß** das Nachstellgetriebe (11) einen Antriebsbereich (12) und einen Abtriebsbereich (13) sowie eine zwischen den beiden Bereichen (12, 13) liegende momentenabhängige Kupplung (17, 18) aufweist.

9. Scheibenbremse nach Anspruch 8, **dadurch gekennzeichnet, daß** die momentenabhängige Kupplung eine Torsionsfeder (17) aufweist.

10. Scheibenbremse nach Anspruch 9, **dadurch gekennzeichnet, daß** die Torsionsfeder (17) vorgespannt ist.

11. Scheibenbremse nach Anspruch 9 oder 10, **dadurch gekennzeichnet, daß** die Torsionsfeder (17) dazu ausgelegt ist, im Bremsüberhub Energie zu speichern und damit im Lösehub die Stellspindel (7) im Sinne einer Nachstellung zu verstellen.

## Claims

1. Disk brake, in particular for commercial vehicles, having
a brake disk (2),
a brake caliper (3),
at least one application device (4) lying within the brake caliper (3) on one side of the brake disk (2),
an axially movable device (5), which moves a brake pad (10) axially toward the brake disk (2) by means of at least one actuating spindle (7) when the brake is actuated, wherein the actuating spindle (7) can be rotated, has an external thread (7a), and is screwed into a threaded bore in the movable device (5), and
an adjustment mechanism (11), which can be rotated about a rotation axis (A-B) lying parallel to the rotation axis of the brake disk (2) and which, in the case of rotation in a first direction of rotation (11n) bringing about adjustment, rotates the actuating spindle (7) because of a rotational coupling acting in said direction of rotation,
**characterized in**
**that** the adjustment mechanism (11) has a thread device (15a), which, at least in the case of rotation in a second direction of rotation (11l) opposite the first direction of rotation (lln), meshes with the external thread (7a) of the actuating spindle (7) and screws the adjustment mechanism (11) in relation to the actuating spindle (7), wherein the thread device has a threaded disk (15a) which has at least one internal thread portion fitting with the external thread (7a) of the actuating spindle (7) and wherein the adjustment mechanism (11) has a clamping roller free-running hub (15).

2. Disk brake according to Claim 1, **characterized in that** the adjustment mechanism (11) has an overload clutch (17, 18).

3. Disk brake according to Claim 2, **characterized in that** the overload clutch has a tolerance sleeve (18).

4. Disk brake according to Claim 2, **characterized in that** the overload clutch is a ratchet clutch.

5. Disk brake according to one of the preceding claims, **characterized in that** the adjustment mechanism (11) can be moved axially by at least a distance (X) which corresponds to the maximum adjustment distance per adjusting step.

6. Disk brake according to one of the preceding claims, **characterized by** a braking device (19) which counteracts rotation of the actuating spindle (7).

7. Disk brake according to one of the preceding claims, **characterized by** at least one groove (16f) on the adjustment mechanism (11), the width of which corresponds to a desired release clearance (L).

8. Disk brake according to one of the preceding claims, **characterized in that** the adjustment mechanism (11) has an input region (12) and an output region (13) as well as a torque-dependent clutch (17, 18) situated between the two regions (12, 13).

9. Disk brake according to Claim 8, **characterized in that** the torque-dependent clutch has a torsion spring (17) .

10. Disk brake according to Claim 9, **characterized in that** the torsion spring (17) is preloaded.

11. Disk brake according to Claim 9 or 10, **characterized in that** the torsion spring (17) is designed to store energy in the braking overstroke and hence to adjust the actuating spindle (7) in the release stroke for purposes of brake adjustment.

## Revendications

1. Frein à disque, en particulier pour véhicules utilitaires, avec
un disque de frein (2),
un étrier de frein (3),
au moins un dispositif de serrage (4) situé sur un côté du disque de frein (2) à l'intérieur de l'étrier de frein (3),
un dispositif déplaçable axialement (5), qui lors de l'actionnement du frein déplace une garniture de frein (10) axialement en direction du disque de frein (2) au moyen d'au moins une broche de réglage (7), dans lequel la broche de réglage (7) peut tourner, présente un filet extérieur (7a) et est vissée dans un alésage fileté dans le dispositif déplaçable (5), et
un mécanisme d'ajustage (11), qui peut tourner autour d'un axe de rotation (A-B) agencé parallèlement à l'axe de rotation du disque de frein (2) et qui, lors d'une rotation dans un premier sens de rotation (11n) provoquant un ajustage, fait tourner la broche de réglage (7) à cause d'un accouplement rotatif agissant dans ce sens de rotation,
**caractérisé en ce que** le mécanisme d'ajustage (11) présente un dispositif fileté (15a), qui au moins lors d'une rotation dans un second sens de rotation (11l) opposé au premier sens de rotation (11n) vient en prise avec le filet extérieur (7a) de la broche de réglage (7) et visse le mécanisme d'ajustage (11) par rapport à la broche de réglage (7), dans lequel le dispositif fileté présente un disque fileté (15a), qui présente au moins une partie filetée intérieure s'adaptant au filet extérieur (7a) de la broche de réglage (7) et dans lequel le mécanisme d'ajustage (11) présente une roue libre de rouleau de serrage (15).

2. Frein à disque selon la revendication 1, **caractérisé en ce que** le mécanisme d'ajustage (11) présente un accouplement de surcharge (17, 18).

3. Frein à disque selon la revendication 2, **caractérisé en ce que** l'accouplement de surcharge présente une douille de tolérance (18).

4. Frein à disque selon la revendication 2, **caractérisé en ce que** l'accouplement de surcharge est un accouplement à cliquets.

5. Frein à disque selon l'une quelconque des revendications précédentes, **caractérisé en ce que** le mécanisme d'ajustage (11) peut se déplacer axialement d'au moins une distance (X), qui correspond à la distance d'ajustage maximale par pas d'ajustage.

6. Frein à disque selon l'une quelconque des revendications précédentes, **caractérisé par** un dispositif de freinage (19) s'opposant à une rotation de la broche de réglage (7).

7. Frein à disque selon l'une quelconque des revendications précédentes, **caractérisé par** au moins une rainure (16f) sur le mécanisme d'ajustage (11), dont la largeur correspond à une distance de dégagement de consigne (L).

8. Frein à disque selon l'une quelconque des revendications précédentes, **caractérisé en ce que** le mécanisme d'ajustage (11) présente une zone d'entraînement (12) et une zone de sortie (13) ainsi qu'un couplage (17, 18) dépendant du couple et situé entre les deux zones (12, 13).

9. Frein à disque selon la revendication 8, **caractérisé en ce que** le couplage dépendant du couple est un ressort de torsion (17).

10. Frein à disque selon la revendication 9, **caractérisé en ce que** le ressort de torsion (17) est précontraint.

11. Frein à disque selon la revendication 9 ou 10, **caractérisé en ce que** le ressort de torsion (17) est conçu pour accumuler de l'énergie dans la surcourse du frein et avec celle-ci de déplacer dans la course de détente la broche de réglage (7) dans le sens d'un ajustage.
